# EUROPEAN PATENT SPECIFICATION

(11) **EP 4 486 826 B1**
(45) Date of publication and mention of the grant of the patent: **27.05.2026**
(21) Application number: 23706640.2
(22) Date of filing: 27.02.2023
(51) Int. Cl.: C08L 5/08, C08L 99/00, C12N 1/14, D06N 3/00, C08H 99/00

(54) **TRANSFORMATION OF MYCELIUM INTO LEATHER, SKIN, HIDE AND/ OR TEXTILE SUBSTITUTE**
MYCELIUMTRANSFORMATION IN LEDER, HAUT, FELL UND/ODER TEXTILERSATZ
TRANSFORMATION DU MYCÉLIUM EN SUBSTITUT DE CUIR, DE PEAU, DE REVÊTEMENT ET/OU DE TEXTILE

(30) Priority: 04.03.2022 EP 22305256
(43) Date of publication of application: 08.01.2025
(73) Proprietor: France Croco, 50190 Periers (FR)
(72) Inventor: GIGANTE, Jean Marie, 50190 PERIERS (FR)
(74) Representative: Santarelli
(86) International application number: PCT/EP2023/054887
(87) International publication number: WO 2023/165941

(56) References cited:
- WO-A1-2018/183735
- CN-A- 113 501 994

## Description

### FIELD OF THE INVENTION

The present invention concerns a process for producing leather, skin, hide and/or textile substitute from mycelium. The present invention also concerns a leather, skin, hide and/or textile substitute obtainable by said process and use thereof.

### BACKGROUND AND PRIOR ART

Animal leather is one of the world's most purchased products. However, traditional leather, typically produced from animal such as cow, bull, calf, sheep and goat, may raise ethical and environmental issues for consumers. It has also been observed that sourcing adequate quantities of quality raw hides and skins is becoming more and more challenging with the global drop in meat consumption.

In this context, during last decade, animal leather alternatives appeared on the market, such as those made from plastics, fungi and in particular mycelium, pineapple leaves, fruits' pulp and cactus.

Mycelium is currently one of the most promising alternatives.

WO 2018/183735 A1 discloses a leather substitute obtained by: soaking mycelium in an organic solvent containing calcium chloride, which has antimicrobial properties and is therefore a biocide; pressing; and drying.

However, none of the leather substitute marketed to date including those made from mycelium presents satisfying physicochemical properties such as texture, visual, odor, resistance such as tear strength and hydrophobic behavior.

There is thus a need to provide a process to produce leather, skin, hide and/or textile substitute made from mycelium having physicochemical properties at least equivalent to tanned animal leather.

The present inventors have surprisingly found a process for producing leather, skin, hide and/or textile substitute from mycelium having improved chemical and physical performances and interesting aesthetical properties such as texture, visual, odor, resistance such as tear strength and hydrophobic behavior, with respect to traditional leather substitutes and animal-sourced leather.

### SUMMARY OF THE INVENTION

The present invention relates to a process for producing leather, skin, hide and/or textile substitute from mycelium comprising the following steps:
- a step of soaking mycelium in an organic solvent,
- a step of reacting mycelium with an aqueous solution comprising a surfactant, a biocide, and optionally an essential oil, and
- a step of reacting mycelium with an alkali.

The present invention also relates to a leather, skin, hide and/or textile substitute obtainable according to the process as previously defined.

The present invention also relates to the use of leather, skin, hide and/or textile substitute as previously defined for producing clothing, shoes, bags, accessories, coverings and/or equipment.

### DETAILED DESCRIPTION

A first object of the present invention relates to a process for producing leather, skin, hide and/or textile substitute from mycelium comprising the following steps:
- a step of soaking mycelium in an organic solvent,
- a step of reacting mycelium with an aqueous solution comprising a surfactant, a biocide, and optionally an essential oil, and
- a step of reacting mycelium with an alkali.

By "leather" it is herein preferably understood any material obtained from the tanning, or chemical treatment, of animal skins and hides.

By "skin" or "hide" it is herein preferably understood animal skin in the whole state before tanning or dried for human use. These terms may apply to all animal skin, with and without the animal hair on the surface. These terms may include furs, which are harvested from various species with soft hair.

By "textile" it is herein preferably understood a flexible material made by creating an interlocking bundle of yarns or threads, which are produced by spinning raw fibers, coming from natural or synthetic sources, into long and twisted lengths. Examples of textiles include, but are not limited to, tissues.

Preferably, the leather, skin, hide and/or textile substitute is a leather, skin and/or hide substitute.

Preferably, by « mycelium » it is understood a panel and/or a sheet of layered mycelium.

The mycelium used in the process as previously defined may come from any fungal strains.

Preferably, the fungal strain belongs to *Basidiomycetes.*

Examples of *Basidiomycetes* include, but are not limited to, *Agaricomycotina, Pucciniomycotina* and *Ustilaginomycotina,* preferably *Agaricomycotina.*

Examples of *Agaricomycotina* include, but are not limited to, *Tremellomycetes, Dacrymycetes,* and *Agaricomycetes,* preferably *Agaricomycetes.*

Examples of *Agaricomycetes* include, but are not limited to, *Auriculariales, Sebacinales, Cantharellales, Trechisporales, Gloeophyllales, Hymenochaetales, Corticiales, Polyporales, Russulales* and *Thelephorales,* preferably *Polyporales.*

Examples of *Polyporales* include, but are not limited to, *Albatrellaceae, Boreostereaceae, Byssomeruliaceae, Cystostereaceae, Epitheliaceae, Fomitopsidaceae, Ganodermataceae, Grammotheleaceae, Hapalopilaceae, Hyphodermataceae, Meripilaceae, Meruliaceae, Phanerochaetaceae, Podoscyphaceae, Polyporaceae, Sistotremataceae, Sparassidaceae, Steccherinaceae, Tubulicrinaceae* and *Xenasmataceae,* preferably *Ganodermataceae* and *Polyporaceae.*

Thus, preferably the mycelium strain is selected from *Ganodermataceae* and *Polyporaceae.*

Examples of *Ganodermataceae* include, but are not limited to, *Amauroderma, Ganoderma, Haddowia, Humphreya and Trachyderma,* preferably *Ganoderma* such as *Ganoderma adspersum, Ganoderma ahmadii, Ganoderma annulare, Ganoderma applanatum, Ganoderma atrum, Ganoderma australe, Ganoderma boninense, Ganoderma capense, Ganoderma carnosum, Ganoderma chalceum, Ganoderma cupreum, Ganoderma curtisii, Ganoderma flexipes, Ganoderma formosanum, Ganoderma fornicatum, Ganoderma fulvellum, Ganoderma gibbosum, Ganoderma hoehnelianum, Ganoderma incrassatum, Ganoderma japonicum, Ganoderma lingzhi, Ganoderma lipsiense, Ganoderma lobatum, Ganoderma lucidum, Ganoderma mastoporum, Ganoderma meredithae, Ganoderma microsporum, Ganoderma miniatocinctum, Ganoderma mirabile, Ganoderma multipileum, Ganoderma multiplicatum, Ganoderma mutabile, Ganoderma neojaponicum, Ganoderma oerstedii, Ganoderma orbiforme, Ganoderma oregonense, Ganoderma parvulum, Ganoderma pfeifferi, Ganoderma philippii, Ganoderma platense, Ganoderma pseudoferreum, Ganoderma ramosissimum, Ganoderma resinaceum, Ganoderma sessile, Ganoderma sessiliforme, Ganoderma shangsiense, Ganoderma sichuanense, Ganoderma sinense, Ganoderma steyaertanum, Ganoderma stipitatum, Ganoderma subamboinense, Ganoderma subfornicatum, Ganoderma tenue, Ganoderma tomatum, Ganoderma tropicum, Ganoderma tsugae, Ganoderma tsunodae, Ganoderma tuberculosum, Ganoderma valesiacum* and *Ganoderma weberianum,* preferably *Ganoderma lucidum, Ganoderma resinaceum* and *Ganoderma sessile.*

Examples of *Polyporaceae* include, but are not limited to, *Abundisporus, Amyloporiella, Aurantiporus, Australoporus, Austrolentinus, Bridgeoporus, Cerrena, Cinereomyces, Coriolopsis, Cryptomphalina, Cryptoporus, Cystidiophorus, Daedaleopsis, Datronia, Dentocorticium, Dichomitus, Diplomitoporus, Earliella, Echinochaete, Epithele, Epithelopsis, Erastia, Faerberia, Favolus, Flabellophora, Frantisekia, Fuscocerrena, Fomes, Globifomes, Grammothele, Grammothelopsis, Hapalopilus, Haploporus, Heliocybe, Hexagonia, Hymenogramme, Laccocephalum, Laetifomes, Lentinus, Lenzites, Leptoporus, Lignosus, Lithopolyporales, Lopharia, Loweporus, Macrohyporia, Megasporoporia, Microporellus, Microporus, Mollicarpus, Mycelithe, Navisporus, Neofavolus, Neolentinus, Nigrofomes, Nigroporus, Oligoporus, Pachykytospora, Panus, Perenniporia, Phaeotrametes, Piloporia, Podofomes, Polyporus, Poria, Porogramme, Poronidulus, Pseudofavolus, Pseudopiptoporus, Pycnoporus, Pyrofomes, Royoporus, Rubroporus, Ryvardenia, Skeletocutis, Sparsitubus, Spongipellis, Stiptophyllum, Thermophymatospora, Tinctoporellus, Trametes, Trametopsis, Trichaptum, Tyromyces, Vanderbylia, Wolfiporia* and *Xerotus,* preferably *Cerrena, Datronia, Dichomitus, Echinochaete, Mollicarpus, Neolentinus, Tyromyces.*

The mycelium used in the process as previously defined may have been directly extracted from fungi or obtained by solid and/or liquid fermentations.

The mycelium used in the process as previously defined may be crude or may have been modified by additional processing step.

By "crude" it is herein preferably understood a mycelium that has been directly extracted from fungi or obtained by solid and/or liquid fermentations and which has not undergone any additional processing step.

Examples of additional processing step comprise, but are not limited to, plasticizing with glycerol.

The mycelium used in the process as previously defined may be non-hybrid or hybrid, preferably non-hybrid.

By "hybrid" it is herein preferably understood a mycelium that has grown on a fabric material and/or a synthetic polymer and thus encases the fabric material and/or the synthetic polymer.

Preferably, the mycelium used in the process as previously defined is a crude and non-hybrid mycelium.

Advantageously, the steps of soaking the mycelium in an organic solvent and reacting mycelium with an aqueous solution comprising a surfactant, a biocide, and optionally an essential oil aim at the rehydration of the mycelium as well as the extraction of water-soluble components and stripping of undesirable fats from mycelium thereby purifying the mycelium hyphae network from interfibrillar compounds.

Advantageously, after the step of reacting mycelium with an aqueous solution comprising a surfactant, a biocide, and optionally an essential oil, the resulting mycelium is sufficiently purified, stabilized and perfectly rehydrated in its thickness.

The organic solvent may be selected from an ether solvent, an alcohol solvent such as a glycol solvent, an alcohol ether solvent such as a glycol ether solvent, and mixtures thereof, preferably from a glycol ether solvent.

The ether solvent may be selected from ethyl ether, diethyl ether, dimethyl ether, and mixtures thereof.

The alcohol solvent may be selected from methanol, ethanol, n-propanol, i-propanol, n-butanol, i-butanol, glycol solvent such as alkyl ethers of ethylene glycol or of propylene glycol, and mixtures thereof.

The alcohol ether solvent may be selected from glycol ether solvents, and mixtures thereof.

Preferably, the glycol ether solvent is selected from methylene glycol ether and derivatives thereof, ethylene glycol ether and derivatives thereof, propylene glycol ether and derivatives thereof, dipropylene glycol methyl ether and derivatives thereof such as 3-(3-methoxypropoxy)-1-propanol, and mixtures thereof, more preferably from dipropylene glycol methyl ether such as 3-(3-methoxypropoxy)-1-propanol, and mixtures thereof.

The step of soaking the mycelium in an organic solvent may be performed at a temperature comprised between 10°C and 30°C, preferably between 15°C and 25°C, more preferably between 18°C and 22°C, and even more preferably at approximately 20°C.

The step of soaking the mycelium in an organic solvent may be performed for a time comprised between 5 minutes and 90 minutes, preferably between 30 minutes and 75 minutes, more preferably between 45 minutes and 65 minutes, and even more preferably for approximately 60 minutes.

The surfactant may be anionic, cationic or non-ionic. Preferably, the surfactant is a non-ionic surfactant.

Examples of anionic surfactants include, but are not limited to, alkylbenzene sulfonates, alkyl sulfonates, alkyl sulfates, salts of fluorinated fatty acids, fatty alcohol sulfates, polyoxyethylene fatty alcohol ether sulfates, polyoxyethylene fatty alcohol phosphates ether, alkyl alcohol amide, alkyl sulfonic acid acetamide, salts of alkyl succinate sulfonate, polyoxyethylene monolaurate, and mixtures thereof.

Examples of cationic surfactants include, but are not limited to, triethylamine hydrochloride, octenidine dihydrochloride, cetrimonium bromide, cetylpyridinium chloride, dimethyldioctadecylammonium chloride, benzethonium chloride, and mixtures thereof.

Examples of non-ionic surfactants include, but are not limited to, polyglycerol alkyl ethers, glycosyl dialkyl ethers, polyoxyethylene alkyl ethers such as EUSAPON^{®} OC commercialized by STAHL, BORRON^{®} DNC commercialized by TFL, and mixtures thereof.

Preferably, examples of non-ionic surfactants include, but are not limited to, EUSAPON^{®} OC commercialized by STAHL, BORRON^{®} DNC commercialized by TFL, and mixtures thereof.

The surfactant may be used at a concentration comprised between 0,1 g/L of water and 50 g/L of water, preferably between 1 g/L of water and 25 g/L of water, more preferably between 2 g/L of water and 10 g/L of water, and even more preferably of approximately 4 g/L of water.

Preferably, the biocide is a phenolic biocide.

Examples of phenolic biocides include, but are not limited to, o-Phenylphenol (OPP), p-chloro m-cresol (PCMC), 2-octyl-2H-isothiazol 3-one (OIT), 2-(thiocyanatomethylthio)benzothiazole (TCMTB), and mixtures thereof such as PREVENTOL^{®} WB-L commercialized by LANXESS (mixture of OPP and PCMC), ARACIT^{®} range commercialized by TFL, and mixtures thereof.

Preferably, examples of phenolic biocides include, but are not limited to, PREVENTOL^{®} WB-L commercialized by LANXESS, ARACIT^{®} range commercialized by TFL, and mixtures thereof.

The biocide may be used at a concentration comprised between 0,1 g/L of water and 50 g/L of water, preferably between 0,5 g/L of water and 25 g/L of water, more preferably between 1 g/L of water and 5 g/L of water, and even more preferably of approximately 2 g/L of water.

The essential oils may have a biocide action and/or a perfuming action.

By "biocide action" is it herein preferably understood a fungicide and/or bactericide action.

Examples of essential oils include, but are not limited to, clove essential oil such as VALPAR 17^{®} commercialized by SCRD (Société Commerciale Raoul Duval), bergamot essential oil, thyme essential oil, oregano species essential oils such as oregano essential oil, the oil of Foeniculum vulgare (fennel), and mixtures thereof.

The essential oils may be used at a concentration comprised between 0 g/L of water and 10 g/L of water, preferably between 0,01 g/L of water and 5 g/L of water, more preferably between 0,1 g/L of water and 4 g/L of water, and even more preferably of approximately 4 g/L of water.

Preferably, the aqueous solution comprising a surfactant, a biocide, and optionally an essential oil comprises:
- water,
- between 0,1 g/L of water and 50 g/L of water, preferably between 1 g/L of water and 25 g/L of water, more preferably between 2 g/L of water and 10 g/L of water, and even more preferably approximately of 4 g/L of water of surfactant as previously defined, preferably of non-ionic surfactant as previously defined,
- between 0 g/L of water and 10 g/L of water, preferably between 0,01 g/L of water and 5 g/L of water, more preferably between 0,1 g/L of water and 4 g/L of water, and even more preferably of approximately 4 g/L of water of essential oil as previously defined, and
- between 0,1 g/L of water and 50 g/L of water, preferably between 0,5 g/L of water and 25 g/L of water, more preferably between 1 g/L of water and 5 g/L of water, and even more preferably approximately 2 g/L of water of biocide as previously defined, preferably of phenolic biocide as previously defined.

The mycelium may be present at a concentration comprised between 0,1 g/L of water and 100 g/L of water, preferably between 0,5 g/L of water and 50 g/L of water, more preferably between 1 g/L of water and 20 g/L of water and even more preferably of approximately 1 g/L of water.

In the step of reacting mycelium with an aqueous solution comprising a surfactant, a biocide, and optionally an essential oil, the mycelium may be present at a concentration comprised between 0,1 g/L of water and 100 g/L of water, preferably between 0,5 g/L of water and 50 g/L of water, more preferably between 1 g/L of water and 20 g/L of water and even more preferably of approximately 1 g/L of water.

The skilled person will be able to select the appropriate volume of water, for example based on the mycelium panels' dimensions and the volume of the pit, tank and/or reactor used.

By "pit" it is herein preferably understood a static tank, a static container or a static basin.

In the step of reacting mycelium with an aqueous solution comprising a surfactant, a biocide, and optionally an essential oil, the skilled person will be able to select the appropriate volume of water, for example based on the mycelium panels' dimensions and the volume of the pit, tank and/or reactor used.

The step of reacting mycelium with an aqueous solution comprising a surfactant, a biocide, and optionally an essential oil may be performed in pits, tanks and/or in all types of reactors such as paddle reactor or tannery drum. Preferably, this step is performed in a paddle reactor.

By "paddle reactor" it is herein preferably understood a semi-cylindrical tank used in leather industry. Advantageously, in a paddle reactor, the action of the rotor creates a gentle vortex ensuring a homogeneous stirring and a gentle and regular mechanical action on material.

The skilled person will be able to select the appropriate stirring speed, for example based on the pit, tank and/or reactor used. For example, the step of reacting mycelium with an aqueous solution comprising a surfactant, a biocide, and optionally an essential oil may be performed in a paddle reactor at a rotor's speed comprised between 1 RPM (Revolution Per Minute) and 10 RPM, preferably between 4 RPM and 6 RPM.

The step of reacting mycelium with an aqueous solution comprising a surfactant, a biocide, and optionally an essential oil may be performed at a temperature comprised between 10°C and 40°C, preferably between 25°C and 35°C, more preferably between 28°C and 32°C, and even more preferably at approximately 30°C.

The step of reacting mycelium with an aqueous solution comprising a surfactant, a biocide, and optionally an essential oil may be performed for a time comprised between 6 hours and 72 hours, preferably between 12 hours and 30 hours and more preferably between 18 hours and 24 hours.

Advantageously, the step of reacting mycelium with an alkali enables a controlled transformation of a part of the chitin present in the mycelium into chitosan.

The step of reacting mycelium with an alkali may be performed in pits, tanks and/or in all types of reactors such as paddle reactor or tannery drum. Preferably, this step is performed in a paddle reactor.

Preferably, the step of reacting mycelium with an alkali may be performed in a paddle reactor at a rotor's speed comprised between 1 RPM (Revolution Per Minute) and 10 RPM, preferably between 4 RPM and 6 RPM.

Preferably, the alkali is selected from alkali metal hydroxide, alkaline earth metal hydroxide, and mixtures thereof, preferably from sodium hydroxide, potassium hydroxide, calcium hydroxide, and mixtures thereof.

The alkali may be used at a concentration comprised between 0,1 g/L of water and 6 g/L of water, preferably between 0,5 g/L of water and 5 g/L of water, more preferably between 1 g/L of water and 2 g/L of water, and even more preferably of approximately 1,6 g/L of water.

The step of reacting mycelium with an alkali may be performed at a temperature comprised between 15°C and 60°C, preferably between 25°C and 35°C, more preferably between 28°C and 32°C, and even more preferably at approximately 30°C.

The step of reacting mycelium with an alkali may be performed for a time comprised between 10 minutes and 24 hours, preferably between 30 minutes and 12 hours and more preferably between 2 hours and 5 hours.

During, the step of reacting mycelium with an alkali, the pH in the reactor may be comprised between 8 and 14, preferably between 10 and 13 and more preferably between 11.7 and 12.2.

The process as previously defined may further comprise a step of treating the mycelium with an enriching mixture and a step of treating the mycelium with an acid.

Advantageously, the step of treating the mycelium with an enriching mixture enables to coat the mycelium fibres thereby lubricating the mycelium matrix.

Preferably, the enriching mixture is a mixture comprising a fatliquor, a polymer and/or a copolymer and/or a vegetable extract and/or an emulsifier.

Preferably, the enriching mixture is an aqueous mixture comprising a fatliquor, a polymer and/or a copolymer and/or a vegetable extract and/or an emulsifier.

The fatliquor may be selected from an aliphatic fatty compound and/or aromatic fatty compound, a lanolin-based fatliquor, a lecithin-based fatliquor, a natural sulphited oil, a synthetic sulphited oil, a natural sulphated oil, a synthetic sulphated oil, a vegetal oil, and mixtures thereof.

Examples of aliphatic fatty compound and/or aromatic fatty compounds include, but are not limited to, CATALlX^{®} 150 commercialized by STAHL, LIPSOL MSG commercialized by SCHILL & SEILACHER, LIPODERM^{®} LICKER N commercialized by STAHL, CORILENE^{®} MLT commercialized by STAHL, and mixtures thereof.

Examples of lanolin-based fatliquor, comprise, but are not limited to, LIPODERM^{®} LICKER WN commercialized by STAHL, CORIPOL^{®} BZE-N commercialized by TFL, and mixtures thereof.

Examples of lecithin-based fatliquor, comprise, but are not limited to, LIPODERM^{®} LICKER LA commercialized by STAHL, CORIPOL^{®} ALF commercialized by TFL, and mixtures thereof.

Examples of natural sulphited oil, comprise, but are not limited to, Derminol^{®} APSC commercialized by STAHL, Dermadol 32 commercialized by DERMACOLOR, and mixtures thereof.

Examples of synthetic sulphited oil, comprise, but are not limited to, SEROIL SMZ commercialized by QUIMSER.

Examples of natural sulphated oil, comprise, but are not limited to, SEROIL PLSN commercialized by QUIMSER.

Examples of synthetic sulphated oil, comprise, but are not limited to, TRUPON DB commercialized by TRUMPLER.

Examples of mixtures of natural sulphated oil and synthetic sulphated oil comprise, but are not limited to, DERMINOL^{®} CFS commercialized by STAHL, SEROIL GSN commercialized by QUIMSER, and mixtures thereof.

Examples of vegetal oil, comprise, but are not limited to, sunflower oil, olive oil, and mixtures thereof.

The fatliquor may be present at a concentration comprised between 5 g/L of water and 50 g/L of water, preferably between 20 g/L of water and 40 g/L of water, more preferably of approximately 30 g/L of water.

Examples of emulsifiers comprise, but are not limited to, alkyl phosphate, sodium alkane sulfonate, or mixtures thereof such as LIPODERM^{®} N commercialized by STAHL.

Preferably, examples of emulsifiers comprise, but are not limited to, LIPODERM^{®} N commercialized by STAHL.

The emulsifier may be present at a concentration comprised between 0 g/L of water and 20 g/L of water, preferably between 0,1 g/L of water and 10 g/L of water, more preferably between 0,5 g/L of water and 5 g/L of water, and even more preferably of approximately 1 g/L of water.

The vegetable extract may be natural vegetable extract.

Examples of natural vegetable extract include, but are not limited to, pyrogallol-based natural vegetable extract, catechol-based natural vegetable extract, and mixtures thereof.

Examples of catechol-based natural vegetable extract include, but are not limited to, Mimosa extract, Quebracho wood extract, Gambier wood extract, and mixtures thereof.

Examples of pyrogallol-based natural vegetable extract include, but are not limited to, Chestnut wood extract, Myrobolan fruit extract, and mixtures thereof.

The natural vegetable extract may be added at a concentration comprised between 0 g/L of water and 30 g/L of water, preferably between 1 g/L of water and 15 g/L of water, more preferably between 5 g/L of water and 10 g/L of water, and even more preferably at approximately 8 g/L of water.

Examples of polymer comprise, but are not limited to, acrylic resins.

Examples of copolymer comprise, but are not limited to, STAHLITE^{®} AL2 commercialized by STAHL, STAHLITE^{®} AL3 commercialized by STAHL, and mixtures thereof.

The polymer and/or copolymer may be present at a concentration comprised between 0 g/L of water and 40 g/L of water, preferably between 1 g/L of water and 20 g/L of water, more preferably between 2 g/L of water and 10 g/L of water, and even more preferably at approximately 8 g/L of water.

The mixture may further comprise a natural or synthetic dyestuff.

Examples of natural or synthetic dyestuff comprise, but are not limited to, metal-free dyestuffs, preferably metal-free dyestuffs composed of a mixture of aromatic compounds and azo dyes, such as the Coriacide^{®} range of dyes commercialized from STAHL, and mixtures thereof.

Preferably, examples of natural or synthetic dyestuff comprise, but are not limited to, metal-free dyestuffs such as the Coriacide^{®} range of dyes commercialized from STAHL, and mixtures thereof.

The natural or synthetic dyestuff may be present at a concentration comprised between 0 g/L of water and 25 g/L of water, preferably between 0,01 g/L of water and 15 g/L of water, more preferably between 0,1 g/L of water and 5 g/L of water, and even more preferably at approximately 0,2 g/L of water.

The mycelium panel may be present at a concentration comprised between 0,1 g/L of water and 100 g/L of water, preferably between 0,5 g/L of water and 50 g/L of water, more preferably between 1 g/L of water and 20 g/L of water and even more preferably approximately 1 g/L of water.

In the step of treating the mycelium with an enriching mixture, the mycelium panel may be present at a concentration comprised between 0,1 g/L of water and 100 g/L of water, preferably between 0,5 g/L of water and 50 g/L of water, more preferably between 1 g/L of water and 20 g/L of water and even more preferably approximately 1 g/L of water.

The skilled person will be able to select the appropriate volume of water, for example based on the mycelium panels' dimensions and the volume of the pit, tank and/or reactor used.

In the step of treating the mycelium with an enriching mixture, the skilled person will be able to select the appropriate volume of water, for example based on the mycelium panels' dimensions and the volume of the pit, tank and/or reactor used.

Preferably, the enriching mixture comprises:
- water
- between 5 g/L of water and 50 g/L of water, preferably between 20 g/L of water and 40 g/L of water, and more preferably approximately 30 g/L of water of fatliquor as previously defined such as aliphatic fatty compound and/or aromatic fatty compound, lanolin-based fatliquor, lecithin-based fatliquor, natural sulphated oil and synthetic sulphated oil, aliphatic fatty compound and/or aromatic fatty compound, or mixtures thereof as previously defined,
- between 0 g/L of water and 40 g/L of water, preferably between 1 g/L of water and 20 g/L of water, more preferably between 2 g/L of water and 10 g/L of water, and even more preferably approximately 8 g/L of water of polymer and/or copolymer as previously defined, and
- between 0 g/L of water and 15 g/L of water, preferably between 0,01 g/L of water and 10 g/L of water, more preferably between 0,1 g/L of water and 5 g/L of water, and even more preferably approximately 0,2 g/L of water of natural or synthetic dyestuff as previously defined such as metal-free dyestuffs as previously defined.

Preferably, the enriching mixture comprises:
- water
- between 5 g/L of water and 50 g/L of water, preferably between 20 g/L of water and 40 g/L of water, and more preferably approximately 30 g/L of water of fatliquor as previously defined such as aliphatic fatty compound and/or aromatic fatty compound, lanolin-based fatliquor, lecithin-based fatliquor, natural sulphated oil and synthetic sulphated oil, or mixtures thereof as previously defined,
- between 0 g/L of water and 40 g/L of water, preferably between 1 g/L of water and 20 g/L of water, more preferably between 2 g/L of water and 10 g/L of water, and even more preferably approximately 8 g/L of water of polymer and/or copolymer as previously defined,
- between 0 g/L of water and 15 g/L of water, preferably between 0,01 g/L of water and 10 g/L of water, more preferably between 0,1 g/L of water and 5 g/L of water, and even more preferably approximately 0,2 g/L of water of natural or synthetic dyestuff as previously defined such as metal-free dyestuffs as previously defined,
- between 0 g/L of water and 30 g/L of water, preferably between 1 g/L of water and 15 g/L of water, more preferably between 5 g/L of water and 10 g/L of water, and even more preferably at approximately 8 g/L of water of natural vegetable extract as previously defined, and
- between 0 g/L of water and 20 g/L of water, preferably between 0,1 g/L of water and 10 g/L of water, more preferably between 0,5 g/L of water and 5 g/L of water, and even more preferably of approximately 1 g/L of water of emulsifier as previously defined.

Preferably, the step of treating the mycelium with an enriching mixture is performed at a pH comprised between 5 and 10, preferably between 6 and 9 and more preferably between 6.7 and 8.5.

The steps of treating the mycelium with an enriching mixture may be performed for a time comprised between 1 hour and 72 hours, preferably between 4 hours and 48 hours and more preferably between 6 hours and 36 hours.

The step of treating the mycelium with an enriching mixture may be performed in pits, tanks and/or in all types of reactors such as paddle reactor or tannery drum. Preferably, this step is performed in a paddle reactor. In this case, the step of treating the mycelium with an enriching mixture may be performed for a time comprised between 1 hour and 24 hours, preferably between 4 hours and 16 hours and more preferably between 6 hours and 12 hours.

Preferably, the step of treating the mycelium with an enriching mixture may be performed in a paddle reactor at a rotor's speed comprised between 1 RPM (Revolution Per Minute) and 10 RPM, preferably between 4 RPM and 6 RPM.

The step of treating the mycelium with an enriching mixture may be performed in a static mode that is the formulation is applied as a paste such as concentrated paste with dilution with water such as little dilution with water or without water dilution, onto the mycelium. In this case, the step of treating the mycelium with such enriching mixture may be performed for a time comprised between 1 hour and 72 hours, preferably between 4 hours and 48 hours and more preferably between 12 hours and 36 hours.

For any of the above options, the treatment of mycelium with an enriching mixture may be performed at a temperature comprised between 15°C and 80°C, preferably between 30°C and 50°C, more preferably between 35°C and 45°C and even more preferably at approximately 40°C.

Advantageously, the step of treating the mycelium with an acid enable to fix the enriching mixture on the mycelium fibres.

The acid may be a weak acid.

Preferably the acid is selected from alpha hydroxy acids such as hydroxyacetic acid (glycolic acid), 2-hydroxypropanoic acid (lactic acid), 2-hydroxy-1,4-butanedioic acid (malic acid), dihydroxybutanedioic acid (tartaric acid), and mixtures thereof, tricarboxylic acids such as 2-hydroxypropane-1,2,3-tricarboxylic acid (citric acid), 1-hydroxypropane-1,2,3-tricarboxylic acid (isocitric acid), prop-1-ene-1,2,3-tricarboxylic acid (aconitic acid), propane-1,2,3-tricarboxylic acid, 2-hydroxynonadecane-1,2,3-tricarboxylic acid (agaric acid), benzene-1,3,5-tricarboxylic acid (trimesic acid), and mixtures thereof, dicarboxylic acids such as ethanedioic acid (oxalic acid), propanedioic acid (malonic acid), butanedioic acid (succinic acid), pentanedioic acid (glutaric acid), hexanedioic acid (adipic acid), heptanedioic acid (pimelic acid), octanedioic acid (suberic acid), nonanedioic acid (azelaic acid), decanedioic acid (sebacic acid), undecanedioic acid, dodecanedioic acid, tridecanedioic acid (brassylic acid), tetradecanedioic acid, pentadecanedioic acid, hexadecanedioic acid (thapsic acid), and mixtures thereof, monocarboxylic acids such as methanoic acid (formic acid), ethanoic acid (acetic acid), propanoic acid (propionic acid), butanoic acid (butyric acid), pentanoic acid (valeric acid), hexanoic acid (caproic acid), heptanoic acid (enanthic acid), octanoic acid (caprylic acid), nonanoic acid (pelargonic acid), decanoic acid (capric acid), undecanoic acid (undecylic acid), dodecanoic acid (lauric acid), tridecanoic acid (tridecylic acid), tetradecanoic acid (myristic acid), pentadecanoic acid (pentadecylic acid), hexadecanoic acid (palmitic acid), heptadecanoic acid (margaric acid), octodecanoic acid (stearic acid), nonadecanoic acid (non-adecylic acid), eicosanoic acid (arachidic acid), docosanoic acid (behenic acid), benzoic acid, 2-hydroxybenzoic acid (salicylic acid), 2-mercaptopropanoic acid (thiolactic acid), and mixtures thereof, or mixtures thereof. More preferably, the acid is selected from 2-hydroxypropane-1,2,3-tricarboxylic acid (citric acid), 2-hydroxypropanoic acid (lactic acid), methanoic acid (formic acid), and mixtures thereof.

The step of reacting mycelium with an acid may be performed in pits, tanks and/or all types of reactors such as paddle reactor or tannery drum.

When the step of reacting mycelium with an acid is performed in a paddle reactor, the rotor's speed may be comprised between 1 RPM (Revolution Per Minute) and 10 RPM, preferably between 4 RPM and 6 RPM.

Preferably, during the step of reacting mycelium with an acid, the pH is comprised between 2.9 and 5.9, preferably between 3.5 and 5 and more preferably between 3.9 and 4.4.

The step of treating the mycelium with an acid may be performed for a time comprised between 15 minutes and 6 hours, preferably between 30 minutes and 2 hours and more preferably between 45 minutes and 90 minutes.

The process may further comprise another step of treating the mycelium with an enriching mixture as previously defined and of treating the mycelium with an acid as previously defined.

In other words, the step of treating the mycelium with an enriching mixture as previously defined and the step of treating the mycelium with an acid as previously defined may be repeated one or more times, preferably one or two times with the same or different mixture, with the same or different acid and with the same of different conditions as previously defined such as pH, time, temperature and/or type of reactor.

Advantageously, this subsequent step of treating the mycelium with an enriching mixture enables to treat the enriched material for colour, mechanical properties adjustments, texture and softness.

The subsequent step of treating the mycelium with an enriching mixture as previously defined may be performed at a pH comprised between 5 and 10, preferably between 6 and 9 and more preferably between 6.7 and 8.5.

The subsequent step of treating the mycelium with an enriching mixture as previously defined may be performed for a time comprised between 1 and 72 hours, preferably between 3 and 48 hours and more preferably between 4 and 36 hours.

The subsequent step of treating the mycelium with an enriching mixture as previously defined may be performed in pits, tanks and/or all types of reactor such as paddle reactor or tannery drum. Preferably, this step is performed in a paddle reactor. In this case, the subsequent step of treating the mycelium with an enriching mixture may be performed for a time comprised between 1 hour and 24 hours, preferably between 3 hours and 8 hours and more preferably between 4 hours and 6 hours.

Preferably, the subsequent step of treating the mycelium with an enriching mixture may be performed in a paddle reactor at a rotor's speed comprised between 1 RPM (Revolution Per Minute) and 10 RPM, preferably between 4 RPM and 6 RPM.

The subsequent step of treating the mycelium with an enriching mixture may be performed in a static mode that is the formulation is applied as a paste such as concentrated paste with dilution with water such as little dilution with water or without water dilution, onto the mycelium. In this case, the subsequent step of treating the mycelium with an enriching mixture may be performed for a time comprised between 1 hour and 72 hours, preferably between 4 hours and 48 hours and more preferably between 12 hours and 36 hours.

The subsequent step of treating the mycelium with an enriching mixture may be performed at a temperature comprised between 15°C and 80°C, preferably between 30°C and 50°C, more preferably between 35°C and 45°C and even more preferably at approximately 40°C.

The subsequent step of treating the mycelium with an enriching mixture may be performed in pits, tanks and/or all types of reactors such as paddle reactor or tannery drum.

When the subsequent step of treating the mycelium with an enriching mixture is performed in a paddle reactor, the rotor's speed may be comprised between 1 RPM (Revolution Per Minute) and 10 RPM, preferably between 4 RPM and 6 RPM.

During the subsequent step of treating the mycelium with an acid, the pH may be comprised between 2.9 and 5.9, preferably between 3.5 and 5 and more preferably between 3.9 and 4.4. The subsequent step of treating the mycelium with an acid may be performed for a time comprised between 15 minutes and 6 hours, preferably between 30 minutes and 2 hours and more preferably between 45 minutes and 90 minutes.

After some or all steps of treating the mycelium with an enriching mixture and treating the mycelium with an acid as previously defined, the resulting mycelium may be rinsed with an inorganic solvent such as water.

After some or all steps of treating the mycelium with an enriching mixture and treating the mycelium with an acid as previously defined and/or after optional steps of rinsing with an inorganic solvent such as water, the process may comprise a step of drying the resulting mycelium.

In particular, the process may further comprise one or more steps of drying the mycelium at a temperature comprised between 15°C and 70°C, preferably between 18°C and 30°C, more preferably between 18°C and 22°C and even more preferably at approximately 20°C.

The one or more steps of drying the mycelium may be performed at a relative humidity (RH) comprised between 35 % and 75 %, preferably between 40 % and 60 % and more preferably between 45% and 55%.

The one or more steps of drying the mycelium may be performed for a time comprised between 2 hours and 72 hours, preferably between 12 hours and 36 hours and more preferably between 18 hours and 24 hours.

Advantageously, the moisture content of the mycelium after the drying step is comprised between 6 % and 15 %, preferably between 8 and 13 %, and more preferably between 10 % and 12 % by weight with respect to the total weight of mycelium.

The process may further comprise a step of impregnating and/or coating the resulting mycelium with a mixture comprising a polymer and/or a copolymer and/or a resin and/or a resin cross-linker and/or a natural vegetable extract such as pyrogallol-based natural vegetable extract, catechol-based natural vegetable extract, or mixtures thereof, and/or synthetic tanning agent such as aromatic synthetic tanning agent, aliphatic synthetic tanning agent, or mixtures thereof, and optionally a wax and/or a pigment and/or a natural or synthetic dyestuff and/or silicon.

Preferably, the mixture is an aqueous mixture or solvent-based mixture, preferably an aqueous mixture, comprising a polymer and/or a copolymer and/or a resin and/or a resin cross-linker and/or a natural vegetable extract such as pyrogallol-based natural vegetable extract, catechol-based natural vegetable extract, or mixtures thereof, and/or synthetic tanning agent such as aromatic synthetic tanning agent, aliphatic synthetic tanning agent, or mixtures thereof, and optionally a wax and/or a pigment and/or a natural or synthetic dyestuff and/or silicon.

The skilled person will be able to select the appropriate concentration depending on the application method and the final effect to be obtained in terms of texture, performance and softness.

Advantageously, the step of impregnating and/or coating the resulting mycelium with a mixture as previously defined enables the impregnation and/or coating of the enriched mycelium with the mixture as previously defined thereby creating the foundations of a strong adhering surface finishing.

Examples of polymer include, but are not limited to, isocyanate-based polymer such as Melio^{®} 09S11 commercialized by STAHL, XR 13-436 commercialized by STAHL, and mixtures thereof, aziridine-based polymer such as XR 25-21 commercialized by STAHL, carbodiimide-based polymer such as XR 13-906 commercialized by STAHL, urea-based polymer such as Melio^{®} 09R179 commercialized by STAHL, and mixtures thereof.

Examples of copolymer include, but are not limited to, RH 6678 commercialized by STAHL.

Examples of resin include, but are not limited to, acrylic resin such as RI6520 commercialized by STAHL, RA 2 commercialized by STAHL, Corial^{®} Ultrasoft NT commercialized by STAHL, Corial^{®} Micro PA commercialized by STAHL and mixtures thereof, polyurethane resin such as Aqualen^{®} Top APT commercialized by STAHL, WT 43-985 commercialized by STAHL, AP PR Mat commercialized by STAHL, WT 22-500 commercialized by STAHL, Astacin^{®} Matting LV commercialized by STAHL, and mixtures thereof, and mixtures thereof.

The polymer, copolymer and/or resin may be present at a concentration ranging from 0 g/L of water or solvent to 1000 g/L of water or solvent, preferably ranging from 250 g/L of water or solvent to 800 g/L of water or solvent. The mixture may be applied at a rate between 100 and 500 grams, preferably between 200 and 400 grams per square meter of material's surface, and more preferably at a rate of 300 grams per square meter of material's surface.

Examples of resin cross-linker include, but are not limited to, isocyanate crosslinker, aziridine crosslinker, carbodiimide crosslinker, and mixtures thereof.

The resin cross-linker may be present at a concentration ranging from 0 g/L of water or solvent to 100 g/L of water or solvent, preferably ranging from 10 g/L of water or solvent to 100 g/L of water or solvent. The mixture may be applied at a rate between 100 and 500 grams, preferably between 200 and 400 grams per square meter of material's surface, and more preferably at a rate of 300 grams per square meter of material's surface.

Examples of natural vegetable extract include, but are not limited to, pyrogallol-based natural vegetable extract, catechol-based natural vegetable extract, and mixtures thereof.

Examples of catechol-based natural vegetable extract include, but are not limited to, Mimosa extract, Quebracho wood extract, Gambier wood extract, and mixtures thereof.

Examples of pyrogallol-based natural vegetable extract include, but are not limited to, Chestnut wood extract, Myrobolan fruit extract, and mixtures thereof.

The natural vegetable extract may be added at a concentration comprised between 0 g/L of water or solvent and 30 g/L of water or solvent, preferably between 1 g/L of water or solvent and 15 g/L of water or solvent, more preferably between 5 g/L of water or solvent and 10 g/L of water or solvent, and even more preferably at approximately 8 g/L of water or solvent.

Examples of synthetic tanning agent include, but are not limited to, aromatic synthetic tanning agent, aliphatic synthetic tanning agent, and mixtures thereof.

Examples of aromatic synthetic tanning agent include, but are not limited to, TANICOR^{®} range of syntans commercialized by STAHL, and mixtures thereof.

Examples of aliphatic synthetic tanning agent include, but are not limited to, ACTIDIAL GTA commercialized by ATC.

The synthetic tanning agent may be present at a concentration comprised between 0 g/L of water or solvent and 30 g/L of water or solvent, preferably between 1 g/L of water or solvent and 15 g/L of water or solvent, more preferably between 5 g/L of water or solvent and 10 g/L of water or solvent, and even more preferably at approximately 8 g/L of water or solvent.

Examples of waxes include, but are not limited to LEPTON^{®} WAX 11 commercialized by STAHL, Lepton^{®} CS commercialized by STAHL, and mixtures thereof.

The wax may be present at a concentration comprised between 0 g/L of water or solvent and 100 g/L of water or solvent, preferably between 10 g/L of water or solvent and 70 g/L of water or solvent, more preferably between 40 g/L of water or solvent and 60 g/L of water or solvent, and even more preferably at approximately 50 g/L of water or solvent.

Examples of pigment include, but are not limited to, organic pigments, inorganic pigments and mixtures thereof.

Examples of pigment include, but are not limited to, PPE^{®} range of pigments commercialized by STAHL.

Examples of natural or synthetic dyestuff include, but are not limited to, EUKESOLAR^{®} range of liquid dyes commercialized by STAHL, CORIACIDE^{®} solid dyes commercialized by STAHL, and mixtures thereof.

The pigment and/or natural or synthetic dyestuff may be present at a concentration comprised between 0 g/L of water or solvent and 100 g/L of water or solvent, preferably between 10 g/L of water or solvent and 100 g/L of water or solvent. The mixture may be applied at a rate between 100 and 500 grams, preferably between 200 and 400 grams per square meter of material's surface, and more preferably at a rate of 300 grams per square meter of material's surface.

Examples of silicon include, but are not limited to, HM-22-132 commercialized by STAHL.

The silicon may be present at a concentration ranging from 0 g/L of water or solvent and 100 g/L of water or solvent, preferably ranging from 5 g/L of water or solvent and 100 g/L of water or solvent The mixture may be applied at a rate between 100 and 500 grams, preferably between 200 and 400 grams per square meter of material's surface, and more preferably at a rate of 300 grams per square meter of material's surface.

Examples of mixtures of silicon and waxes, include but are not limited to, AMZ commercialized by STAHL.

Examples of mixtures of acrylic resin and waxes, include but are not limited to, Melio^{®} Ground NC commercialized by STAHL.

The mixtures may be applied by hand (padding), by spraying, by roller-coating or by immersion, preferably by spraying or by roller-coating.

This step may be repeated once or more, preferably one, two, three, four or five times, or as many times required depending on the final application.

This step or some or all repetitions of this step may be followed by a drying step.

The drying step may be performed at a temperature comprised between 20°C and 95°C, preferably between 35°C and 75°C and more preferably between 45°C and 70°C.

The drying step may be performed at a relative humidity (RH) comprised between 35 % and 75 %, preferably between 50 % and 70 % and more preferably between 55 % and 65 %.

The drying step may be performed for a time comprised between 3 minutes and 48 hours, preferably between 15 hours and 35 hours and more preferably between 24 hours and 28 hours depending on the drying temperature.

A drying conveyor may be used for the drying step.

This step or some or all repetitions of this step may be followed by a shaping step such as pressurizing step, embossing step and in particular grain design, and/or combinations thereof.

A hydraulic press and/or a rotopress may be used for the pressurizing step.

The pressurizing step may be performed at a pressure comprised between 10 bars and 300 bars, preferably between 50 bars and 220 bars, more preferably between 50 bars and 200 bars and even more preferably between 140 bars and 160 bars.

The pressurizing step may be performed at a temperature comprised between 60°C and 120°C, preferably between 65°C and 100°C and more preferably 75°C and 85°C.

The pressurizing step may be performed for a duration comprised between 0,5 second and 60 seconds, preferably between 1 second and 30 seconds and more preferably between 1 second and 3 seconds.

The embossing step may be performed at a pressure comprised between 10 bars and 300 bars, preferably between 50 bars and 220 bars, more preferably between 50 bars and 200 bars and even more preferably between 140 bars and 160 bars.

The embossing step may be performed at a temperature comprised between 60°C and 120°C, preferably between 65°C and 100°C and more preferably 75°C and 85°C.

The embossing step may be performed for a duration comprised between 0,5 second and 60 seconds, preferably between 1 second and 30 seconds and more preferably between 1 second and 3 seconds.

The embossing step may include the printing of a pattern or of words.

The embossings may be performed with a positive impression (thereby creating a negative impression in the material) or with a set of impressions (male and female) creating a positive/embossed pattern on the material.

A hydraulic press may be used for the embossing step.

Mycelium's surface embossing can be performed using a smooth/mirror plate or an embossing plate engraved with any design, whether imitating leather surface, graphic, geometric or other patterns.

In addition to the embossing process, the mycelium may be processed into a dry-milling drum to develop a specific texture and surface appearance.

Such milling can be performed at a temperature comprised between 20°C and 60°C, preferably between 30°C and 40°C depending on the effect to be obtained.

Such milling can be performed at a relative humidity comprised between 20% and 95%, preferably between 40% and 80% depending on the effect to be obtained.

Such milling can be performed for a time comprised between 20 minutes and 72 hours, preferably between 30 minutes and 2 hours and more preferably for approximately 1 hour depending on the effect to be obtained.

Such milling can be performed at a speed comprised 2 RPM (Revolutions Per Minute) and 30 RPM, more preferably between 5 RPM and 19 RPM and even more preferably up to 16 RPM depending on the effect to be obtained.

The process may also comprise a step of applying a metallic foil and/or fabric, optionally followed by a shaping step as previously defined.

The process may also comprise a step of physical vapor deposition (PVD) of coatings (such as metals and/or ceramics) and/or applying a metallic foil and/or fabric, optionally followed by a shaping step as previously defined.

The present invention is not limited to a specific step order.

In a preferred embodiment, the process comprises the following steps:
- a step (1) of soaking mycelium in an organic solvent as previously defined,
- a step (2) of reacting mycelium resulting from step (1) with an aqueous solution comprising a surfactant, a biocide, and optionally an essential oil as previously defined, and
- a step (3) of reacting mycelium resulting from step (2) with an alkali as previously defined.

In a preferred embodiment, the process comprises the following steps:
- a step (1) of soaking mycelium in an organic solvent as previously defined,
- a step (2) of reacting mycelium resulting from step (1) with an aqueous solution comprising a surfactant, a biocide, and optionally an essential oil as previously defined,
- a step (3) of reacting mycelium resulting from step (2) with an alkali as previously defined,
- a step (4) of treating the mycelium resulting from step (3) with an enriching mixture as previously defined, and
- a step (5) of treating the mycelium resulting from step (4) with an acid as previously defined.

In a preferred embodiment, the process comprises the following steps:
- a step (1) of soaking mycelium in an organic solvent as previously defined,
- a step (2) of reacting mycelium resulting from step (1) with an aqueous solution comprising a surfactant, a biocide, and optionally an essential oil as previously defined,
- a step (3) of reacting mycelium resulting from step (2) with an alkali as previously defined,
- a step (4) of treating the mycelium resulting from step (3) with an enriching mixture as previously defined,
- a step (5) of treating the mycelium resulting from step (4) with an acid as previously defined,
- optionally a step (6) of rinsing the mycelium resulting from step (5) as previously defined,
- optionally a step (7) of drying the mycelium resulting from step (5) and/or (6) as previously defined,
- optionally a subsequent step (8) of treating the mycelium resulting from step (5), (6) and/or (7) with an enriching mixture,
- optionally a subsequent step (9) of treating the mycelium resulting from step (5), (6), (7) and/or (8) with an acid as previously defined,
- optionally a step (10) of rinsing the mycelium resulting from step (8) and/or (9) as previously defined,
- optionally a step (11) of drying the mycelium resulting from step (9) and/or (10) as previously defined, and
- optionally a step (12) of impregnating and/or coating the resulting mycelium resulting from step (5), (6), (7), (8), (9), (10) and/or (11) with a mixture comprising a polymer and/or a copolymer and/or a resin and/or a resin cross-linker and/or a natural vegetable extract such as pyrogallol-based natural vegetable extract, catechol-based natural vegetable extract, or mixtures thereof, and/or synthetic tanning agent such as aromatic synthetic tanning agent, aliphatic synthetic tanning agent, or mixtures thereof, and optionally a wax and/or a pigment and/or a natural or synthetic dyestuff and/or silicon.

By "as previously defined" it may be referred to the process parameters but also to the nature and concentration of components used at each step.

A second object of the present invention relates a leather, skin, hide and/or textile substitute obtainable according to the process as previously defined.

Preferably, said leather, skin, hide and/or textile substitute comprises chitin and chitosan in a ratio (chitin : chitosan) comprised between 5% and 50%, preferably between 20% and 40%, and more preferably between 25% and 35%.

The ratio (chitin : chitosan) may be measured by any method well-known by the skilled person. Preferably, the ratio (chitin : chitosan) is measured by solid-state nuclear magnetic resonance (solid-state NMR), by gas chromatography-mass spectrometry (GC-MS) or by liquid chromatography-mass spectrometry (LC-MS), and more preferably by solid-state nuclear magnetic resonance (solid-state NMR).

A third object of the present invention relates to the use of leather, skin, hide and/or textile substitute as previously defined for producing clothing, shoes, bags, accessories, coverings and/or equipment.

In particular, the leather, skin, hide and/or textile substitute can be used for producing clothing, shoes, bags, accessories in fashion and/or luxury trades but also for producing coverings and/or equipment for the automotive industry, aviation industry, furniture, interior decoration and/or design or parts thereof.

Examples of accessories include, but are not limited to, hats, caps, watch straps, belts, bag straps and parts thereof.

A fourth object of the present invention relates to a leather, skin, hide and/or textile substitute comprising chitin and chitosan in a ratio (chitin : chitosan) comprised between 5% and 50%, preferably between 20% and 40%, and more preferably between 25% and 35%.

Contrary to traditional leather, skin, hide and/or textile substitute, the leather, skin, hide and/or textile substitute of the present invention has improved chemical and physical performances and interesting aesthetical properties such as texture, visual, odor, resistance such as tear strength and hydrophobic behavior.

In particular, contrary to the traditional leather, skin, hide and/or textile substitute, the leather, skin, hide and/or textile substitute of the present invention has a hydrophobic behavior, no odor, does not delaminates, is flexible in hand and does not have a cardboard aspect.

### BRIEF DESCRIPTION OF FIGURES

Figures 1A and 1B: SEM pictures of raw mycelium panels
Figures 2A and 2B: SEM pictures of mycelium panels obtained after step (2)
Figure 3A and 3B: SEM pictures of mycelium panels obtained after step (5)
Figure 4A and 4B: SEM pictures of mycelium panels obtained after step (10)

### EXAMPLES

### Example 1: process for treating panels of mycelium according to the present invention

### - Step (1) of soaking the panels of mycelium in an organic solvent:

Panels of raw mycelium corresponding to the strain polypore commercialized by MOGU S.r.l were soaked in a paddle reactor during 1 hour at 20°C in a bath of 3-(3-methoxypropoxy)-1-propanol.

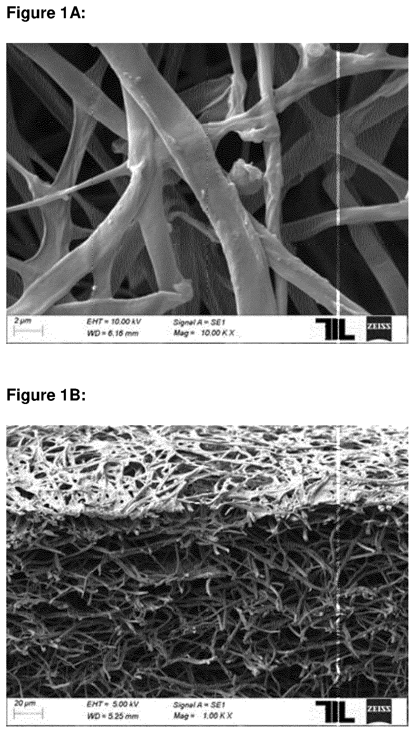

SEM pictures of the raw panels of mycelium (before soaking) are presented on figure 1.

### - Step (2) of reacting the panels of mycelium with an aqueous solution comprising a surfactant, a biocide, and optionally an essential oil:

Then, the panels of mycelium were introduced in a paddle reactor of 2800 litres capacity commercialized by ITALPROGETTI Spa with:
- 2500 L of water,
- 4 g for 1 L of water of EUSAPON^{®} OC commercialized by STAHL (non-ionic surfactant),
- 2 g for 1 L of water of PREVENTOL^{®} WB-L commercialized by LANXESS (phenolic biocide), and
- 4 g for 1 L of water of VALPAR 17^{®} commercialized by SCRD (Société Commerciale Raoul Duval) (organic clove essential oil).

A stirring was performed during 21 hours by using a rotor speed at 4 RPM.

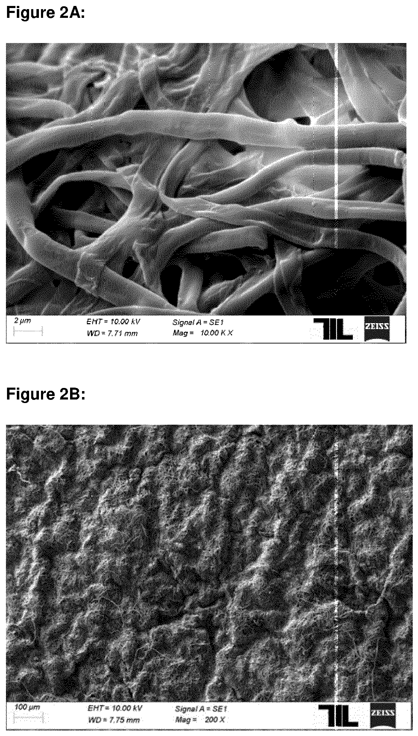

SEM pictures of panels of mycelium after step (2) are presented on figure 2.

As shown on the SEM pictures, after this step, the hyphae network has been purified of interfibrillar compounds.

### - Step (3) of reacting the panels of mycelium with an alkali:

Subsequently, in the paddle reactor, the panels of mycelium were mixed with a sodium hydroxide solution (diluted at 30%) during 3,5 hours by using a rotor speed at 6 RPM. The temperature was controlled to 30°C and the pH was maintained at 12 with a suitable addition of the sodium hydroxide solution (diluted at 30%).

After this step, a controlled amount of chitin has been transformed into chitosan.

### - Step (4) of treating the panels of mycelium with an enriching mixture:

This step was performed in a paddle reactor at a temperature of 40°C, with regular mechanical action for a duration of 10 hours by using a rotor speed at 6 RPM.

The panels of mycelium were treated with a formulation comprising:
- 2500 L of water,
- 3.6 g for 1 L of water of Catalix^{®} 150 commercialized by STAHL (slightly cationic fatliquor polymer),
- 11.2 g for 1 L of water of LIPSOL MSG commercialized by SCHILL & SEILACHER (a combination of synthetic and natural softening agents),
- 6 g for 1 L of water of STAHLITE^{®} AL2 commercialized by STAHL (copolymer dispersions),
- 1 g for 1 L of water of STAHLITE^{®} AL3 commercialized by STAHL (copolymer dispersions),
- 0.9 g for 1 L of water of LIPODERM^{®} LICKER N commercialized by STAHL (anionic emulsifier and stabiliser),
- 7 g for 1 L of water of CORILENE^{®} MLT commercialized by STAHL (sulphited animal oils, modified vegetable oils and aliphatic hydrocarbons), and
- 9.6 g for 1 L of water of DERMINOL^{®} CFS commercialized by STAHL (sulphited natural and synthetic oils).

Alternatively, the above-mentioned formulation may be applied as a concentrated paste onto the panels of mycelium for a duration of 36 hours.

### - Step (5) of treating the panels of mycelium with an acid:

After full penetration of the formulation, the reagents were fixed by mixing the panels of mycelium in a paddle reactor with formic acid during 2 hours by using a rotor speed at 6 RPM. The pH was maintained to 4 with suitable addition of formic acid.

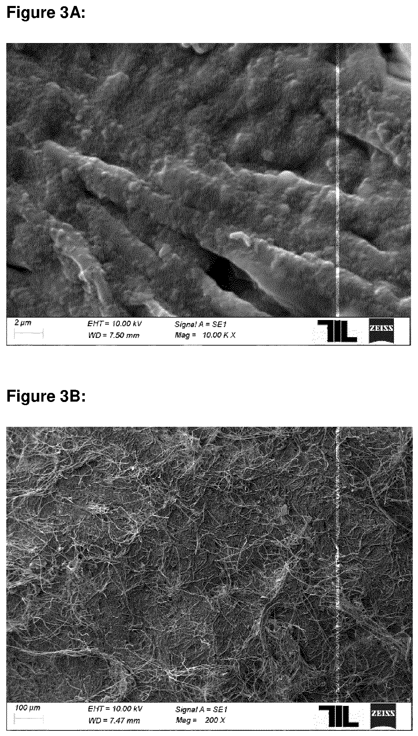

SEM pictures of panels of mycelium after step (5) are presented on figure 3.

As shown on the SEM picture, after steps (4) and (5), the designed formulation coats the mycelium fibres allowing an optimum lubrication of the matrix.

### - Step (6) of drying:

The panels of mycelium were dried at 20°C and 55 % Relative Humidity (RH) for 24 hours.

After this step, the moisture content in the dried panels of mycelium is approximately 10 % by weight with respect to the total weight of the panels of mycelium.

### - Subsequent step (7) of treating the panels of mycelium with an enriching mixture comprising dyestuff:

This step was carried out in a paddle reactor with regular mechanical action for a duration of 5 hours at 40°C using the following reagents in a water bath at neutral pH (pH 7) by using a rotor speed at 6 RPM:
- 2500 L of water,
- 0.2 g for 1 L of water of Coriacide^{®} commercialized by STAHL (metal-free dyestuffs),
- 11.2 g for 1 L of water of LIPSOL MSG commercialized by SCHILL & SEILACHER (a combination of synthetic and natural softening agents),
- 7 g for 1 L of water of LIPODERM^{®} LICKER WN commercialized by STAHL (lanolin-based fatliquor),
- 9.6 g for 1 L of water of LIPODERM^{®} LICKER LA commercialized by STAHL (lecithin-based fatliquor), and
- 7 g for 1 L of water of DERMINOL^{®} CFS commercialized by STAHL (sulphited natural and synthetic oils).

### - Subsequent step (8) of treating the panels of mycelium with an acid:

After full penetration, the reagents were fixed by mixing the panel of mycelium in a paddle reactor with formic acid during 2 hours by using a rotor speed at 6 RPM. The pH was maintained to 4 by suitable addition of formic acid.

### - Step (9) of rinsing the panels of mycelium with water and step of drying:

The panels of mycelium were rinsed with water.

The mycelium was then dried at 20°C and 55 % Relative Humidity (RH) for 24 hours.

After this step, the moisture content in the dried panels of mycelium is approximately 10 % by weight with respect to the total weight of the panels of mycelium.

### - Step (10) of impregnating and/or coating the resulting mycelium

The enriched panel of mycelium was coated with a water solution comprising:
- Water qsp 1 litre,
- 100 g for 1 L of water of RI6520 commercialized by STAHL (acrylic resin),
- 50 g for 1 L of water of Melio^{®} 09S11 commercialized by STAHL (isocyanate emulsion), and
- 20 g for 1 L of water of XR 13-436 commercialized by STAHL (poly-Isocyanate emulsion).

The panels of mycelium were then dried flat under tension at 20°C and 55% RH before being plated under pressure at 150 bars at 80°C for 2 seconds.

After the smooth/mirror plating, the specific embossing (grain design) was then carried out at 170 bars and at 80°C for 10 seconds.

The panel of mycelium was then coated with a water-based coat composed of:
- Water qsp 1 litre,
- 100 g for 1 L of water of Melio^{®} Ground NC commercialized by STAHL (acrylic resin mixed with waxes),
- 100 g for 1 L of water of Corial^{®} Ultrasoft NT commercialized by STAHL (acrylic resin emulsion),
- 75 g for 1 L of water of Astacin^{®} Matting LV commercialized by STAHL (polyurethane resin emulsion)
- 200 g for 1 L of water of Corial^{®} Micro PA commercialized by STAHL (acrylic resin emulsion),
- 80 g for 1 L of water of pigments,
- 30 g for 1 L of water of Melio^{®} 09S11 commercialized by STAHL (isocyanate emulsion), and
- 20 g for 1 L of water of XR 13-436 commercialized by STAHL (poly-Isocyanate emulsion).

Then, the panels of mycelium were dried at 70°C on a drying conveyor.

A RA 2 resin commercialized by STAHL (acrylic resin emulsion) was then sprayed on the surface of the panel of mycelium. The panel of mycelium was dried again.

The panel of mycelium was then plated with a smooth/mirror plate at 150 bars, 70 °C during 2 seconds.

The panel of mycelium was then coated with a water-based coat composed of:
- Water qsp 1 litre,
- 350 g for 1 L of water of WT 22-500 commercialized by STAHL (polyurethane emulsion),
- 50 g for 1 L of water of Astacin^{®} Matting LV commercialized by STAHL (polyurethane resin emulsion),
- 10 g for 1 L of water of AMZ commercialized by STAHL (silicon and waxes emulsion),
- 40 g for 1 L of water of Lepton^{®} CS commercialized by STAHL (wax emulsion), and
- 50 g for 1 L of water of Melio^{®} 09S11commercialized by STAHL (Isocyanate emulsion).

The panels of mycelium were then dried at 80°C on a drying conveyor and kept on hold overnight at 40°C.

The material was then plated under pressure (at 70 bars, at 70°C and for 2 seconds).

A fabric backing was applied by:
- applying an acrylic resin emulsion (RA 2 commercialized by STAHL) on the reverse side of the panels of mycelium,
- drying the panels of mycelium,
- applying a fabric on the surface of the panels of mycelium,
- plating the panels of mycelium with a smooth/mirror plate (eventually over a backing paper) at 150 bars, at 70°C and for 2 seconds.

For soft milled grain pattern, the panels of mycelium were placed inside a dry-milling drum and milled at 40°C, 80 % RH at 16 RPM for 30 minutes and then at 30°C, 40% RH at 6 RPM for 20 minutes.

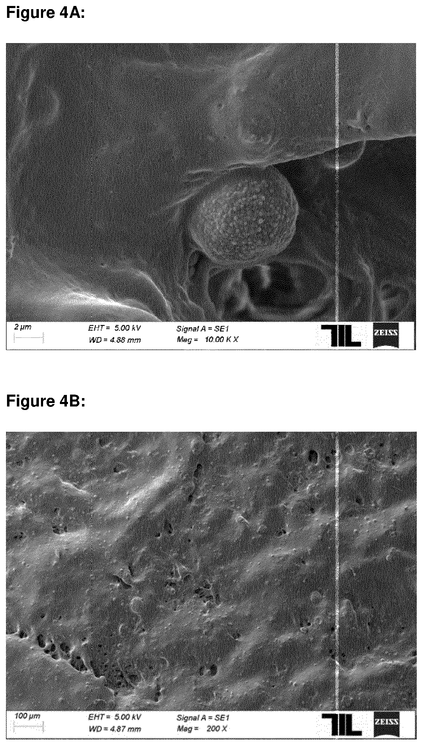

SEM pictures of panel of mycelium after step (10) are presented on figure 4.

## Claims

1. A process for producing leather, skin, hide and/or textile substitute from mycelium comprising the following steps:
- a step of soaking mycelium in an organic solvent,
- a step of reacting mycelium with an aqueous solution comprising a surfactant, a biocide, and optionally an essential oil, and
- a step of reacting mycelium with an alkali.

2. The process according to claim 1, wherein the organic solvent is selected from an ether solvent, an alcohol solvent such as a glycol solvent, an alcohol ether solvent such as a glycol ether solvent, and mixtures thereof, preferably from a glycol ether solvent.

3. The process according to claim 1 or 2, wherein the surfactant is a non-ionic surfactant

4. The process according to anyone of claims 1 to 3, wherein the biocide is a phenolic biocide.

5. The process according to anyone of claims 1 to 4, wherein the alkali is selected from alkali metal hydroxide, alkaline earth metal hydroxide, and mixtures thereof, preferably from sodium hydroxide, potassium hydroxide, calcium hydroxide, and mixtures thereof.

6. The process according to anyone of claims 1 to 5, wherein said process further comprises a step of treating the mycelium with an enriching mixture and a step of treating the mycelium with an acid.

7. The process according to claim 6, wherein the enriching mixture is a mixture comprising a fatliquor, a polymer and/or a copolymer and/or a vegetable extract and/or an emulsifier.

8. The process according to claim 7, wherein the fatliquor is selected from an aliphatic fatty compound and/or aromatic fatty compound, a lanolin-based fatliquor, a lecithin-based fatliquor, a natural sulphited oil, a synthetic sulphited oil, a natural sulphated oil, a synthetic sulphated oil, a vegetal oil, and mixtures thereof.

9. The process according to claim 7 or 8, wherein the mixture further comprises a natural or synthetic dyestuff.

10. The process according to anyone of claims 6 to 9, wherein the acid is a weak acid, preferably selected from alpha hydroxy acids such as hydroxyacetic acid, 2-hydroxypropanoic acid, 2-hydroxy-1,4-butanedioic acid, dihydroxybutanedioic acid, and mixtures thereof, tricarboxylic acids such as 2-hydroxypropane-1,2,3-tricarboxylic acid, 1-hydroxypropane-1,2,3-tricarboxylic acid, prop-1-ene-1,2,3-tricarboxylic acid, propane-1,2,3-tricarboxylic acid, 2-hydroxynonadecane-1,2,3-tricarboxylic acid, benzene-1,3,5-tricarboxylic acid, and mixtures thereof, dicarboxylic acids such as ethanedioic acid, propanedioic acid, butanedioic acid, pentanedioic acid, hexanedioic acid, heptanedioic acid, octanedioic acid, nonanedioic acid, decanedioic acid, undecanedioic acid, dodecanedioic acid, tridecanedioic acid, tetradecanedioic acid, pentadecanedioic acid, hexadecanedioic acid, and mixtures thereof, monocarboxylic acids such as methanoic acid, ethanoic acid, propanoic acid, butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octodecanoic acid, nonadecanoic acid, eicosanoic acid, docosanoic acid, benzoic acid, 2-hydroxybenzoic acid, 2-mercaptopropanoic acid, and mixtures thereof, or mixtures thereof, preferably the acid is selected from 2-hydroxypropane-1,2,3-tricarboxylic acid, 2-hydroxypropanoic acid, methanoic acid, and mixtures thereof.

11. The process according to anyone of claims 1 to 10, wherein the process further comprises a step of impregnating and/or coating the resulting mycelium with a mixture comprising a polymer and/or a copolymer and/or a resin and/or a resin cross-linker and/or a natural vegetable extract such as pyrogallol-based natural vegetable extract, catechol-based natural vegetable extract, or mixtures thereof, and/or synthetic tanning agent such as aromatic synthetic tanning agent, aliphatic synthetic tanning agent, or mixtures thereof, and optionally a wax and/or a pigment and/or a natural or synthetic dyestuff and/or silicon.

12. A leather, skin, hide and/or textile substitute obtainable according to the process as defined in anyone of claims 1 to 11.

13. The leather, skin, hide and/or textile substitute according to claim 12, wherein said leather, skin, hide and/or textile substitute comprises chitin and chitosan in a ratio (chitin : chitosan) comprised between 5% and 50%, preferably between 20% and 40%, and more preferably between 25% and 35%.

14. Use of leather, skin, hide and/or textile substitute as defined in claim 12 or 13 for producing clothing, shoes, bags, accessories, coverings and/or equipment.

## Patentansprüche

1. Verfahren zur Herstellung von Leder-, Haut-, Fell- und/oder Textilersatz aus Myzel, das die folgenden Schritte umfasst:
- einen Schritt des Einweichens des Myzels in einem organischen Lösungsmittel,
- einen Schritt des Reagierens des Myzels mit einer wässrigen Lösung, die ein Tensid, ein Biozid und optional ein ätherisches Öl umfasst, und
- einen Schritt des Reagierens des Myzels mit einem Alkali.

2. Verfahren nach Anspruch 1, wobei das organische Lösungsmittel aus einem Etherlösungsmittel, einem Alkohollösungsmittel wie einem Glykollösungsmittel, einem Alkoholetherlösungsmittel wie einem Glykoletherlösungsmittel und Mischungen davon, vorzugsweise aus einem Glykoletherlösungsmittel, ausgewählt ist.

3. Verfahren nach Anspruch 1 oder 2, wobei das Tensid ein nichtionisches Tensid ist.

4. Verfahren nach einem der Ansprüche 1 bis 3, wobei das Biozid ein phenolisches Biozid ist.

5. Verfahren nach einem der Ansprüche 1 bis 4, wobei das Alkali aus Alkalimetallhydroxid, Erdalkalimetallhydroxid und Mischungen davon, vorzugsweise aus Natriumhydroxid, Kaliumhydroxid, Calciumhydroxid und Mischungen davon, ausgewählt ist.

6. Verfahren nach einem der Ansprüche 1 bis 5, wobei das Verfahren ferner einen Schritt des Behandelns des Myzels mit einer Anreicherungsmischung und einen Schritt des Behandelns des Myzels mit einer Säure umfasst.

7. Verfahren nach Anspruch 6, wobei die Anreicherungsmischung eine Mischung ist, die eine Fettlauge, ein Polymer und/oder ein Copolymer und/oder einen Pflanzenextrakt und/oder einen Emulgator umfasst.

8. Verfahren nach Anspruch 7, wobei die Fettlauge aus einer aliphatischen Fettverbindung und/oder aromatischen Fettverbindung, einer Fettlauge auf Lanolinbasis, einer Fettlauge auf Lecithinbasis, einem natürlichen sulfitierten Öl, einem synthetischen sulfitierten Öl, einem natürlichen sulfatierten Öl, einem synthetischen sulfatierten Öl, einem Pflanzenöl und Mischungen davon ausgewählt ist.

9. Verfahren nach Anspruch 7 oder 8, wobei die Mischung ferner einen natürlichen oder synthetischen Farbstoff umfasst.

10. Verfahren nach einem der Ansprüche 6 bis 9, wobei die Säure eine schwache Säure ist, vorzugsweise ausgewählt aus Alphahydroxysäuren wie Hydroxyessigsäure, 2-Hydroxypropansäure, 2-Hydroxy-1 ,4-butandisäure, Dihydroxybutandisäure und Mischungen davon, Tricarbonsäuren wie 2-Hydroxypropan-1 ,2,3-tricarbonsäure, 1-Hydroxypropan-1 ,2,3-tricarbonsäure, Prop-1-en-1,2,3-tricarbonsäure, Propan-1 ,2,3-tricarbonsäure, 2-Hydroxynonadecan-1,2,3-tricarbonsäure, Benzol-1,3,5-tricarbonsäure und Mischungen davon, Dicarbonsäuren wie Ethandisäure, Propandisäure, Butandisäure, Pentanediosäure, Hexandisäure, Heptandisäure, Oktandisäure, Azelainsäure, Decanedisäure, Undecanedisäure, Dodecanedisäure, Tridecandisäure, Tetradecandisäure, Pentadecandisäure, Hexadecandisäure und Mischungen davon, Monocarbonsäuren wie Methansäure, Ethansäure, Propansäure, Butansäure, Pentansäure, Hexansäure, Heptansäure, Oktansäure, Pelargonsäure, Decansäure, Undecansäure, Dodecansäure, Tridecansäure, Tetradecansäure, Pentadecansäure, Hexadecansäure, Heptadecansäure, Octodecansäure, Nonadecansäure, Eicosansäure, Docosansäure, Benzoesäure, 2-Hydroxybenzoesäure, 2-Mercaptopropionsäure und Mischungen davon, oder Mischungen davon, wobei die Säure vorzugsweise aus 2-Hydroxypropan-1-,2,3-tricarbonsäure, 2-Hydroxypropansäure, Methansäure und Mischungen davon ausgewählt ist.

11. Verfahren nach einem der Ansprüche 1 bis 10, wobei das Verfahren ferner einen Schritt des Imprägnierens und/oder Beschichtens des resultierenden Myzels mit einer Mischung umfasst, die ein Polymer und/oder ein Copolymer und/oder ein Harz und/oder einen Harzvernetzer und/oder einen natürlichen Pflanzenextrakt wie einen natürlichen Pflanzenextrakt auf Pyrogallolbasis, einen natürlichen Pflanzenextrakt auf Katecholbasis oder Mischungen davon und/oder einen synthetischen Gerbstoff wie einen aromatischen synthetischen Gerbstoff, einen aliphatischen synthetischen Gerbstoff oder Mischungen davon, und optional ein Wachs und/oder ein Pigment und/oder einen natürlichen oder synthetischen Farbstoff und/oder Silikon umfasst.

12. Leder-, Haut-, Fell- und/oder Textilersatzstoff, der nach dem Verfahren gemäß einem der Ansprüche 1 bis 11 erhältlich ist.

13. Leder-, Haut-, Fell- und/oder Textilersatzstoff nach Anspruch 12, wobei der Leder-, Haut-, Fell- und/oder Textilersatz Chitin und Chitosan in einem Verhältnis (Chitin : Chitosan) von 5 % bis 50 %, vorzugsweise von 20 % bis 40 % und bevorzugter von 25 % bis 35 % umfasst.

14. Verwendung von Leder-, Haut-, Fell- und/oder Textilersatz nach Anspruch 12 oder 13 zur Herstellung von Kleidung, Schuhen, Taschen, Accessoires, Bezügen und/oder Ausrüstung.

## Revendications

1. Procédé pour produire un substitut de cuir, de peausserie, de peau et/ou de textile à partir de mycélium comportant les étapes suivantes :
- une étape de trempage du mycélium dans un solvant organique,
- une étape de réaction du mycélium avec une solution aqueuse comportant un tensioactif, un biocide, et éventuellement une huile essentielle, et
- une étape de réaction du mycélium avec un alcalin.

2. Procédé selon la revendication 1, dans lequel le solvant organique est choisi parmi un solvant éther, un solvant alcoolique tel qu'un solvant glycolique, un solvant éther alcoolique tel qu'un solvant éther glycolique, et leurs mélanges, de préférence parmi un solvant éther glycolique.

3. Procédé selon la revendication 1 ou 2, dans lequel le tensioactif est un tensioactif non ionique.

4. Procédé selon l'une quelconque des revendications 1 à 3, dans lequel le biocide est un biocide phénolique.

5. Procédé selon l'une quelconque des revendications 1 à 4, dans lequel l'alcali est choisi parmi l'hydroxyde de métal alcalin, l'hydroxyde de métal alcalino-terreux et leurs mélanges, de préférence parmi l'hydroxyde de sodium, l'hydroxyde de potassium, l'hydroxyde de calcium et leurs mélanges.

6. Procédé selon l'une quelconque des revendications 1 à 5, dans lequel ledit procédé comporte en outre une étape de traitement du mycélium avec un mélange enrichissant et une étape de traitement du mycélium avec un acide.

7. Procédé selon la revendication 6, dans lequel le mélange enrichissant est un mélange comportant une matière grasse, un polymère et/ou un copolymère et/ou un extrait végétal et/ou un émulsifiant.

8. Procédé selon la revendication 7, dans lequel la matière grasse est choisie parmi un composé gras aliphatique et/ou un composé gras aromatique, une matière grasse à base de lanoline, une matière grasse à base de lécithine, une huile sulfitée naturelle, une huile sulfitée synthétique, une huile sulfatée naturelle, une huile sulfatée synthétique, une huile végétale, et leurs mélanges.

9. Procédé selon la revendication 7 ou 8, dans lequel le mélange comporte en outre un colorant naturel ou synthétique.

10. Procédé selon l'une quelconque des revendications 6 à 9, dans lequel l'acide est un acide faible, de préférence choisi parmi les alpha-hydroxyacides tels que l'acide hydroxyacétique, l'acide 2-hydroxypropanoïque, l'acide 2-hydroxy-1,4-butanedioïque, l'acide dihydroxybutanedioïque, et leurs mélanges, les acides tricarboxyliques tels que l'acide 2-hydroxypropane-1,2,3-tricarboxylique, l'acide 1-hydroxypropane-1,2,3-tricarboxylique, l'acide prop-1-ène-1,2,3-tricarboxylique, l'acide propane-1,2,3-tricarboxylique, l'acide 2-hydroxynonadécane-1,2,3-tricarboxylique, l'acide benzène-1,3,5-tricarboxylique, et leurs mélanges, les acides dicarboxyliques tels que l'acide éthanédioïque, l'acide propanedioïque, l'acide butanedioïque, l'acide pentanedioïque, l'acide hexanedioïque, l'acide heptanedioïque, l'acide octanedioïque, l'acide nonanedioïque, l'acide décanedioïque, l'acide undécanedioïque, l'acide dodécanedioïque, l'acide tridécanedioïque, l'acide tétradécanedioïque, l'acide pentadécanedioïque, l'acide hexadécanedioïque, et leurs mélanges, les acides monocarboxyliques tels que l'acide méthanoïque, l'acide éthanoïque, l'acide propanoïque, l'acide butanoïque, l'acide pentanoïque, l'acide hexanoïque, l'acide heptanoïque, l'acide octanoïque, l'acide nonanoïque, l'acide décanoïque, l'acide undécanoïque, l'acide dodécanoïque, l'acide tridécanoïque, l'acide tétradécanoïque, l'acide pentadécanoïque, l'acide hexadécanoïque, l'acide heptadécanoïque, l'acide octodécanoïque, l'acide nonadécanoïque, l'acide eicosanoïque, l'acide docosanoïque, l'acide benzoïque, l'acide 2-hydroxybenzoïque, l'acide 2-mercaptopropanoïque, et leurs mélanges, ou leurs mélanges, de préférence l'acide est choisi parmi l'acide 2-hydroxypropane-1,2,3-tricarboxylique, l'acide 2-hydroxypropanoïque, l'acide méthanoïque, et leurs mélanges.

11. Procédé selon l'une quelconque des revendications 1 à 10, dans lequel le procédé comporte en outre une étape d'imprégnation et/ou de revêtement du mycélium résultant avec un mélange comportant un polymère et/ou un copolymère et/ou une résine et/ou un réticulant de résine et/ou un extrait végétal naturel tel qu'un extrait végétal naturel à base de pyrogallol, un extrait végétal naturel à base de catéchol, ou leurs mélanges, et/ou un agent tannant synthétique tel qu'un agent tannant synthétique aromatique, un agent tannant synthétique aliphatique, ou leurs mélanges, et facultativement une cire et/ou un pigment et/ou un colorant naturel ou synthétique et/ou du silicium.

12. Substitut de cuir, de peausserie, de peau et/ou de textile pouvant être obtenu selon le procédé tel que défini dans l'une quelconque des revendications 1 à 11.

13. Substitut de cuir, de peausserie, de peau et/ou de textile selon la revendication 12, dans lequel ledit substitut de cuir, de peausserie, de peau et/ou de textile comporte de la chitine et du chitosan dans un rapport (chitine : chitosan) compris entre 5 % et 50 %, de préférence entre 20 % et 40 %, et plus préférentiellement entre 25 % et 35 %.

14. Utilisation du substitut de cuir, de peausserie, de peau et/ou de textile tel que défini dans la revendication 12 ou 13 pour produire des vêtements, des chaussures, des sacs, des accessoires, des revêtements et/ou des équipements.
